# EUROPÄISCHE PATENTANMELDUNG

(11) **EP 3 395 146 A1**
(43) Veröffentlichungstag der Anmeldung: **31.10.2018**
(21) Anmeldenummer: 18401036.1
(22) Anmeldetag: 11.04.2018
(51) Int. Cl.: A01C 17/00

(54) **SCHUTZVORRICHTUNG FÜR EINEN LANDWIRTSCHAFTLICHEN SCHLEUDERSTREUER**

(30) Priorität: 25.04.2017 DE 102017108767
(71) Anmelder: Amazonen-Werke H. Dreyer GmbH & Co. KG, 49205 Hasbergen (DE)
(72) Erfinder: Rahe, Florian, 49504 Lotte (DE); Wessels, Thomas, 49080 Osnabrück (DE); Große Brinkhaus, Andre, 48149 Münster (DE); Ströbel-Fröschle, Markus, 49124 Georgsmarienhütte (DE); Probst, Sergej, 49090 Osnabrück (DE)

(57) **Zusammenfassung**

Schutzvorrichtung (8) für einen landwirtschaftlichen Schleuderstreuer (1), wobei an dem Schleuderstreuer (1) zumindest ein Radarsensor (6) zur Ermittlung der Verteilcharakteristik des Schleuderstreuers (1) angeordnet ist, wobei der Radarsensor (6) einer Streuscheibe (3) des Schleuderstreuers (1) zugeordnet ist. Um eine Schleuderstreuer (1) mit Radarsensoren zur Erfassung der Verteilcharakteristik anzugeben, bei welchem eine mogliche Belastung des Benutzers mit Radarwellen begrenzt wird ist vorgesehen, dass die Schutzvorrichtung (8) derart ausgebildet ist, dass ein Herantreten an den Radarsensor (6) erschwert oder verhindert wird.

## Beschreibung

Die Erfindung betrifft eine Schutzvorrichtung für einen landwirtschaftlichen Schleuderstreuer gemäß dem Oberbegriff des Patentanspruches 1 und einen landwirtschaftlichen Schleuderstreuer mit einer derartigen Schutzvorrichtung.

Landwirtschaftliche Schleuderstreuer sind typischerweise mit zwei Streuscheiben ausgestattet, auf welche der Dünger aus Schieberöffnungen eines Vorratsbehälters aufgegeben und anschließend mittels auf den Streuscheiben angeordneten Schleuderschaufeln unter Zentrifugalwirkung ausgestreut wird. Zu diesem Zweck drehen sich die Streuscheiben während der Arbeit mit hoher Geschwindigkeit. Um ein unbeabsichtigtes Berühren der drehenden Scheiben zu verhindern bzw. zu erschweren ist bei Schleuderstreuern häufig eine Vorrichtung vorgesehen, welche ein Herantreten an die Streuscheiben verhindern soll. Hierbei kann es sich beispielsweise um eine Bügelkonstruktion, wie in der DE102005034281A1 offenbart handeln.

Moderne Schleuderstreuer verfügen zur Optimierung des Ausbringverhaltens über eine zunehmende Anzahl von Sensoren. Hierbei kann es sich beispielsweise um eine Vorrichtung zum wiederholten Wiegen des Inhalts eines Vorratsbehälters handeln, so dass aus dem Vergleich von aufeinanderfolgenden Wiegevorgängen die Änderung des Behälterinhalts pro Zeiteinheit und damit die jeweilige Ausbringmenge ermittelt werden kann. Auch ist vorgesehen, den Streufächer selbst mittels Sensoren zu charakterisieren, so dass die derzeitige Arbeitsbreite, die Geometrie des Streufächers und/oder die Wurfweite bestimmt werden kann. Derartige Messungen werden insbesondere mit Radarwellen durchgeführt. Hierfür sind in der Nähe der Streuscheiben ein oder mehrere Radarsensoren angeordnet. Ist nur ein Sensor vorhanden, so ist dieser typischerweise beweglich ausgestaltet, um den gesamten Streubereich des Streufächers erfassen zu können. Sind mehrere Sensoren vorhanden, so sind diese üblicherweise in Umfangsrichtung des Streufächers derart verteilt, dass auch hierdurch zumindest annähernd der gesamte Streubereich erfasst werden kann. Typischerweise handelt es sich um fünf oder mehr Sensoren pro Scheibe, es können sogar auch 20 oder mehr Sensoren pro Scheibe vorhanden sein. Die Intensität der Radarwellen in unmittelbarer Umgebung der Radarsensoren, insbesondere wenn mehrere Radarsensoren gleichzeitig verwendet werden, kann durchaus signifikant sein.

Aufgabe der vorliegenden Erfindung ist es, einen landwirtschaftlichen Schleuderstreuer mit Radarsensoren zur Erfassung der Verteilcharakteristik anzugeben, bei welchem eine mögliche Belastung des Benutzers mit Radarwellen begrenzt wird.

Diese Aufgabe wird durch den kennzeichnenden Teil des Anspruchs 1 gelöst. Demnach ist vorgesehen, eine Schutzvorrichtung für einen Schleuderstreuer vorzusehen, die derart ausgebildet ist, dass ein Herantreten an den Radarsensor erschwert oder verhindert wird. Auf diese Weise wird sehr effektiv über eine Sicherstellung eines Mindestabstands eines an den Schleuderstreuer herantretenden Benutzers erreicht, dass dieser sich nicht unbeabsichtigt in unmittelbarer Nähe der Radarsensoren aufhält.

In einer möglichen Ausgestaltung der Erfindung sind zumindest zwei Radarsensoren in Umfangsrichtung um zumindest eine Verteilscheiben angeordnet und ist die Schutzvorrichtung derart ausgebildet, dass ein Herantreten an die Radarsensoren erschwert oder verhindert wird. Es kann wie bereits erwähnt vorgesehen sein, dass mehrere Radarsensoren um eine Verteilscheibe angeordnet sind. Diese sind dann insbesondere derart angeordnet, dass sie zumindest annähernd den gleichen Abstand zum Streuscheibenzentrum aufweisen. Die Streuscheiben sind also vorzugsweise in Umfangsrichtung der Verteilscheibe angeordnet und jeder Radarsensor erfasst einen individuellen Bereich des Streufächers. Es kann vorgesehen sein, dass nur an einer Streuscheibe mehrere Radarsensoren angeordnet sind und die jeweiligen Messergebnisse für die andere Streuscheibe übernommen werden. Alternativ kann vorgesehen sein, dass beide Streuscheiben mit jeweils einer Messanordnung von zwei oder mehr Radarsensoren ausgestattet sind. Die Schutzvorrichtung ist für eine Anordnung von Radarsensoren nun derart ausgebildet, dass ein Herantreten an alle an der jeweiligen Streuscheibe vorhandenen Radarsensoren erschwert oder verhindert wird. Somit kann vorgesehen sein, dass eine Schutzvorrichtung pro Anordnung von Radarsensoren also pro Sensoranordnung und/oder Streuscheibe vorgesehen ist, die jeweilige Schutzvorrichtung also das Herantreten an die Radarsensoren einer Streuscheibe erschwert oder verhindert. Für den Fall, dass beide Streuscheiben mit jeweils einer Sensoranordnung ausgerüstet sind, ist somit vorgesehen eine Schutzvorrichtung pro Streuscheibe zu verwenden. Alternativ kann auch vorgesehen sein eine einzige Schutzvorrichtung vorzusehen, welche sowohl das Herantreten an die Sensoranordnung einer ersten Streuscheibe, als auch das Herantreten an die Sensoranordnung einer zweiten Streuscheibe verhindert, so dass in diesem Fall nur eine einzige Schutzvorrichtung pro Schleuderstreuer bei einem Schleuderstreuer mit zwei Streuscheiben benötigt wird.

In einer besonders vorteilhaften Ausgestaltung kann vorgesehen sein, dass die Schutzvorrichtung bügelartig ausgebildet ist. Es kann also vorgesehen sein, dass ein Bügel an dem Schleuderstreuer befestigbar ist, welcher ein Herantreten an die Radarsensoren erschwert oder verhindert. Der Bügel kann beispielsweise an seinen beiden Enden am Vorratstank oder an sonstigen Bauteilen des Schleuderstreuers befestigt werden, so dass eine einfache und robuste Schutzvorrichtung realisiert werden kann.

In einer vorteilhaften Ausgestaltung ist vorgesehen, dass die Radarsensoren an einer Haltevorrichtung angeordnet sind, welche zumindest abschnittsweise zumindest annähernd in Umfangsrichtung der Streuscheibe verläuft und an zumindest einseitig am Schleuderstreuer befestigt ist und dass die Schutzvorrichtung zumindest im Bereich der Radarsensoren die Haltevorrichtung auf der dem Schleuderstreuer abgewandten Seite in horizontaler Richtung umschließend ausgebildet ist. Auf diese Weise wird eine besonders vorteilhafte Ausgestaltung einer Schutzvorrichtung gebildet. Die Radarsensoren sind häufig in dem Abwurfbereich derart angeordnet, dass der Streufächer möglichst vollständig und/oder gleichmäßig erfasst werden kann. Hierfür sind die Radarsensoren auf der in Fahrtrichtung über das Feld gesehen rückwärtigen Seite des Schleuderstreuers angeordnet, da das Streugut bei der Fahrt über das Feld nach hinten geschleudert wird. Üblicherweise ist an dem Schleuderstreuer zu diesem Zweck eine Haltvorrichtung vorgesehen, welche zumindest abschnittsweise und zumindest annähernd konzentrisch zu der oder den Streuscheiben verläuft. Die Radarsensoren sind entsprechend auf dieser Haltevorrichtung befestigt. Die Haltevorrichtung kann an einem Tank oder an anderen Bauteilen des Schleuderstreuers einseitig oder beidseitig befestigt sein. Erfindungsgemäß ist nun vorgesehen, dass die Schutzvorrichtung die Haltevorrichtung in horizontaler Richtung umschließt und zwar zumindest im Bereich der Radarsensoren und zumindest auf der dem Schleuderstreuer abgewandten Seite. Insbesondere kann jedoch auch vorgesehen sein, dass die Schutzvorrichtung die Haltevorrichtung vollständig umschließt. Da die Haltevorrichtung einseitig oder insbesondere beidseitig an dem Schleuderstreuer befestigt ist, ist sichergestellt, dass ein Herantreten an die Radarsensoren somit von allen Seiten erschwert wird. Da die Radarsensoren ausschließlich im Abwurfbereich des Schleuderstreuers angeordnet sind, ist ein Herantreten von vorne entgegen der Fahrtrichtung nicht möglich, da in dieser Richtung der Schleuderstreuer selbst, also der Vorratsbehälter, die jeweilige Scheibe, der Rahmen und sonstige Bauteile einen Zugang zu den Radarsensoren unmöglich machen. Seitlich, also quer zur Fahrtrichtung ist ein Herantreten aus einer Richtung ebenfalls nicht möglich, da sich in dieser Richtung ebenfalls der Tank, die andere Schleuderscheibe und sonstige Bauteile befinden. Ein Herantreten an die Radarsensoren ist also ausschließlich in Fahrtrichtung von Hinten und einseitig quer zur Fahrtrichtung möglich. In diesen Richtungen ist jedoch erfindungsgemäß die Schutzvorrichtung derart angeordnet, dass zumindest im Bereich der Radarsensoren die Haltevorrichtung auf der dem Schleuderstreuer abgewandten Seite in horizontaler Richtung umschließend ausgebildet ist. Die Schutzvorrichtung ist also jeweils auf der dem Schleuderstreuer abgewandten Seite der Radarsensoren angeordnet und erschwert oder verhindert somit effektiv ein Herantreten an die Radarsensoren.

Um einen Mindestabstand zwischen den Radarsensoren und einem Benutzer des Schleuderstreuers sicherzustellen, kann ein Mindestabstand zwischen den Radarsensoren und der Schutzvorrichtung vorgesehen sein, der insbesondere in horizontaler Richtung zumindest 5, vorzugsweise mehr als 10 cm beträgt. Da sich ein Benutzer typischerweise auf dem Erdboden gehend dem Radarsensor nähert ist dieser Abstand der effektive Mindestabstand, der zwischen dem Radarsensor und dem Benutzer sichergestellt bzw. aufrechterhalten wird. Ein Hineingreifen in den Bereich zwischen Schutzvorrichtung und Radarsensor soll hiermit nicht unterbunden werden, allerdings verhindert oder erschwert werden, dass sich ein Benutzer oder eine sonstige Person dem Radarsensor unbeabsichtigt zu sehr nähert.

Es kann alternativ oder zusätzlich vorgesehen sein, dass der Abstand zwischen Radarsensor und Schutzbügel in Richtung der horizontalen Komponente der Abstrahlrichtung der Radarsensoren zumindest 5 cm, vorzugsweise mehr als 10 cm, beträgt. Auf diese Weise kann sichergestellt werden, dass gerade in der Abstrahlrichtung der Radarsensoren, in der die Intensität der Radarwellen besonders hoch ist, ein gewisser Mindestabstand in horizontaler Richtung zwischen einer in der Nähe des Schleuderstreuers stehenden Person und den Radarsensoren eingehalten wird.

Insbesondere kann eine unbeabsichtigte Annäherung alternativ oder zusätzlich auch dadurch verhindert werden, dass zwischen der Schutzvorrichtung und dem Radarsensor in vertikaler Richtung weniger als 30 cm, vorzugsweise weniger als 15 cm, beträgt, dass sich also die Schutzvorrichtung in einem bestimmten Höhenbereich relativ zu den Radarsensoren befindet, so dass ein unbeabsichtigtes Nähern der Radarsensoren durch einzelne Körperteile des Benutzers oder einer sonstigen Person erschwert wird.

Für den Fall, dass die horizontale Komponente der Abstrahlrichtung des oder der Radarsensoren zumindest annähernd radial vom Streuscheibenzentrum weg weist ist vorgesehen, dass die Schutzvorrichtung zumindest in diesem Fall oberhalb der Radarsensoren angeordnet ist. Hierdurch können unbeabsichtigte Reflexionen oder Streuungen von Radarsignalen an der Schutzvorrichtung auf einfache Weise vermieden werden.

In einer vorteilhaften Weiterbildung der Erfindung wird die Schutzvorrichtung insbesondere derart ausgelegt und an dem Schleuderstreuer angeordnet, dass der radiale Abstand zwischen Radarsensor und Schutzvorrichtung auf der dem Schleuderstreuer abgewandten Seite derart gewählt wird, dass die messbare Leistungsflussdichte der Radarwellen auf der dem Schleuderstreuer abgewandten Seite der Schutzvorrichtung weniger als 10 W/m², insbesondere weniger als 1 W/m², beträgt. Auf diese Weise können spezifische, für die EMV-Verträglichkeit von Radarquellen festgelegte Werte eingehalten werden, so dass eine Belastung mit Radarwellen einer sich neben dem Schleuderstreuer befindlichen Person begrenzt werden kann.

In einer besonders vorteilhaften Ausgestaltung ist die Schutzvorrichtung derart ausgebildet, dass sie zumindest eine Streuscheibe auf der dem Schleuderstreuer abgewandten Seite in horizontaler Richtung umschließend ausgebildet ist, so dass ein unbeabsichtigtes Berühren der Streuscheibe erschwert oder verhindert wird. Auf diese Weise kann mittels der Schutzvorrichtung sowohl ein unbeabsichtigtes Herantreten an die Radarsensoren, als auch ein unbeabsichtigtes Berühren der Streuscheiben erschwert oder verhindert werden. Es wird also verhindert, dass eine Person wegen einer Unaufmerksamkeit oder wegen eines Missgeschickes, beispielsweise ein Stolpern, unbeabsichtigt in die Nähe der Radarsensoren gerät oder eine sich drehende Streuschaufel berührt, was zu Verletzungen führen kann. Dies kann insbesondere dadurch erreicht werden, dass die Schutzvorrichtung sowohl die Streuscheibe, als auch die Sensoren auf der dem Schleuderstreuer abgewandten Seite umschließend ausgebildet ist. Dies bedeutet, dass an keiner Stelle des Schleuderstreuers die der Schutzvorrichtung zugeordnete Schleuderscheibe bzw. Radarsensoren durch unbeabsichtigtes Herantreten berührt werden können. Eine Berührung durch absichtliches Hineinfassen in den Bereich hinter der Schutzvorrichtung oder ein starkes Bücken einer Person unter die Schutzvorrichtung soll hierbei jedoch nicht zwingend verhindert werden, um ein Arbeiten an hinter der Schutzvorrichtung liegenden Bauteilen, wie Streuscheiben, Dosierschieber und sonstiges nicht zu sehr zu erschweren.

Beansprucht wird zudem ein landwirtschaftlicher Schleuderstreuer mit einer entsprechenden Schutzvorrichtung.

Weitere vorteilhafte Ausgestaltungen ergeben sich aus der Figurenbeschreibung und den Zeichnungen, hierbei zeigen
- Fig. 1: eine erfindungsgemäße Schutzvorrichtung an einem erfindungsgemäßen Schleuderstreuer,
- Fig. 2: eine erfindungsgemäße Schutzvorrichtung, eine Sensoranordnung und Streuscheibe eines erfindungsgemäßen Schleuderstreuers und
- Fig. 3: einen Schleuderstreuer mit einer Schutzvorrichtung nach dem Stand der Technik.

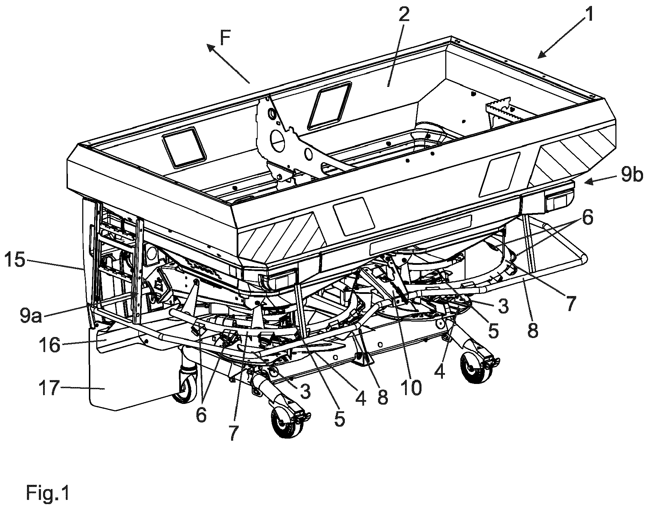

Ein erfindungsgemäßer Schleuderstreuer 1 ist in Fig. 1 gezeigt. Dieser weist unter anderem einen Behälter 2 zur Aufbewahrung von Streugut und im unteren Bereich zwei Streuscheiben 3 mit jeweils zwei Wurfschaufeln 4 auf, mit denen das im Behälter 1 befindliche Material auf der zu bearbeitenden landwirtschaftlichen Fläche verteilt werden kann. Die Zuführung von Streugut zu den Streuscheiben 3 kann hierfür mittels Dosierschiebern 5 gesteuert werden.

Oberhalb der Streuscheibe und zumindest annähernd konzentrisch in Umfangsrichtung der jeweiligen Streuscheibe verteilt angeordnet sind Radarsensoren 6, in diesem Fall sieben pro Streuscheibe 3, welche den Streufächer der jeweiligen Streuscheibe abtasten. Es können auch weniger oder mehr als sieben Radarsensoren 6 pro Streuscheibe vorgesehen sein. Insbesondere kann auch vorgesehen sein, einen einzigen Sensor zu verwenden, welcher in Umfangsrichtung der Streuscheibe 3 schwenkbar angeordnet ist. Ebenso kann vorgesehen sein, dass nur einer der beiden Streuscheiben 3 ein oder mehrere Radarsensoren 6 zugeordnet sind und die gemessenen Signale unter Annahme einer symmetrischen Verteilung auf die zweite Streuscheibe übertragen werden. Die Radarsensoren 6 sind an einer Haltevorrichtung 7 befestigt. Die Haltevorrichtung 7 ist ebenfalls an dem Schleuderstreuer 1 befestigt, so dass die Radarsensoren 6 konzentrisch um die Streuscheiben verteilt sind. Die Radarsensoren befinden sich hierbei bezüglich der Fahrtrichtung F vorwiegend auf der Rückseite des Schleuderstreuers, so dass das nach hinten abgeworfene Streugut von den Radarsensoren 6 mit Radarwellen beaufschlagt werden kann. Um den Verteilprozess nicht zu behindern befinden sich die Radarsensoren 6 zudem in vertikaler Richtung etwas oberhalb der Streuscheiben 3, so dass die Sensoranordnung nicht von dem abgeworfenen Streugut getroffen wird. Ebenso gut können die Radarsensoren auch unterhalb der Streuscheiben 3 angeordnet sein.

Das abgeworfene Streugut wird von den Radarsensoren 6 mit Radarwellen beaufschlagt, so dass aus der Intensität des Messsignals auf die Menge des in den jeweiligen Messbereich abgeworfenen Streugutes geschlossen werden kann und/oder aus der Frequenz des Messsignals auf die Geschwindigkeit und damit die Wurfweite des abgeworfenen Streugutes geschlossen werden kann. Insbesondere aus einem Vergleich der Intensitäten der Radarsensoren 6 einer Streuscheibe kann auf die abgeworfene Streugutmenge und/oder die Verteilcharakteristik und/oder die Arbeitsbreite der jeweiligen Streuscheibe geschlossen werden. Die Messsignale werden entsprechend in einer nicht dargestellten Datenverarbeitungsvorrichtung, beispielsweise einem Jobrechner an dem Schleuderstreuer 1, hinsichtlich Ausbringmenge, Wurfweite, Arbeitsbreite und/oder weiterer Parameter ausgewertet und mit in dem Jobrechner hinterlegten Sollwerten verglichen, so dass bei einer Abweichung mittels einer Regelung durch Einstellung von beispielsweise Schleuderscheibendrehzahl, Dosierschieberstellung und Anpassung des Aufgabepunktes des Streugutes auf die Streuscheiben 3 eine Istwert-Anpassung an die Sollwerte erfolgt.

Oberhalb der Radarsensoren 6 und der Haltevorrichtung 7 ist eine umlaufende, Bügelartige Schutzvorrichtung 8 gezeigt, welche auf der rückwärtigen Seite des Schleuderstreuers 1 sowohl die Radarsensoren 6, als auch die Streuscheiben 3 in horizontaler Richtung umschließt. Die Schutzvorrichtung 8 kann, wie in diesem Fall einstückig ausgebildet sein, kann aber auch aus zwei oder mehr Teilen bestehen. Die Schutzvorrichtung 8 ist in den Bereichen 9a und 9b am Rahmen des Schleuderstreuers befestigt und mittels einer Befestigungsvorrichtung 10 im hinteren Bereich des Behälters 2.

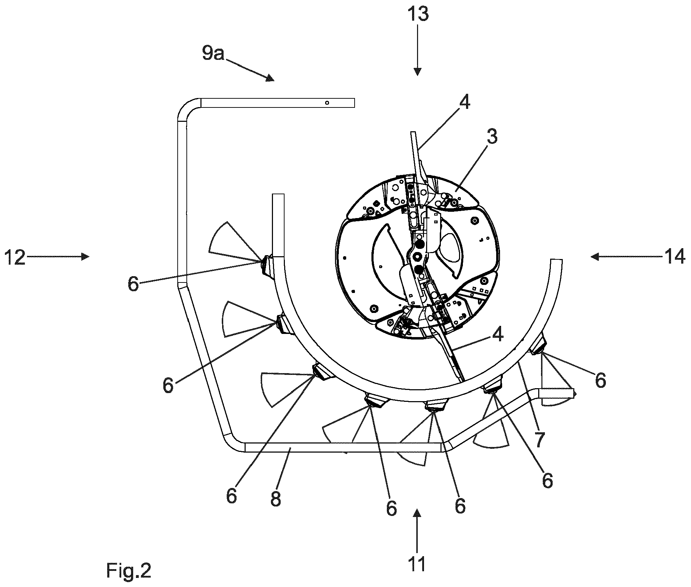

Eine vertikale Ansicht der in Fahrtrichtung F gesehen linken Streuscheibe 3 mit Wurfschaufeln 4 ist in Fig. 2 gezeigt. Die Radarsensoren 6 sind an der Haltevorrichtung 7 befestigt. Der Abstrahlbereich der Radarsensoren 6 besitzt in diesem Fall eine horizontale Komponente, welche zumindest annähernd radial von der Streuscheibe 3 weg zeigt. Um die Qualität des Messsignals der Radarsensoren, insbesondere was die Detektion der Geschwindigkeit des Streugutes angeht, zu optimieren, sind die Abstrahlrichtungen der Sensoren jeweils tangential bzgl. des Umfanges der Streuscheiben und/oder tangential bzgl. der Bahn des oder der Streuschaufeln 4 ausgerichtet, so dass die horizontale Abstrahlrichtung der Radarsensoren 6 in der Regel nicht vollkommen radial zum Streuscheibenzentrum verläuft. Dies führt dazu, dass die Messsignale der Radarsensoren zumindest annähernd parallel zu dem von den Wurfschaufeln 4 tangential abgeworfenen Streugut ausgesendet werden.

Augenscheinlich umschließt die Schutzvorrichtung 8 in horizontaler Richtung sowohl die Streuscheibe 3 mit den sich bewegenden Wurfschaufeln 4, als auch die Radarsensoren 6 an der Haltevorrichtung zumindest aus Richtung 11 und 12 gesehen vollständig, so dass ein unbeabsichtigtes Herantreten an die Radarsensoren 6 oder ein unbeabsichtigtes Berühren der Streuscheibe 3 bzw. der Wurfschaufeln 4 erschwert oder verhindert wird. Nicht notwendig ist dies bzgl. der Richtung 13, da hier Bauteile des Schleuderstreuers, wie der in Fig. 1 gezeigte Spritzschutz 14, 15 oder Rahmenteile 16, ohnehin keinen Zugang zu den Streuscheiben zulassen bzw. der Behälter 2 den Zugang zu den Radarsensoren 6 aus dieser Richtung unmöglich macht. Aus Richtung 14 ist ein Zugang zu der Streuscheibe 3, den Wurfschaufeln 4 oder den Radarsensoren 6 aufgrund der bzgl. der Fahrtrichtung vorhanden Spiegelsymmetrie des Schleuderstreuers 1 nicht denkbar. In dieser Richtung befindet sich die zweite Streuscheibe 3 mit entsprechenden Radarsensoren 6 und einer Schutzvorrichtung 8, so dass letztlich die in Fig. 2 dargestellte Streuscheibe 3, die Wurfschaufeln 4 sowie die Radarsensoren 6 durch die Schutzvorrichtung 8 und die ohnehin an dem Schleuderstreuer 1 sich befindlichen Bauteile gegen ein unbeabsichtigtes Herantreten bzw. Berühren vollständig geschützt sind. Wie bereits erwähnt befindet sich entgegen der Richtung 14 die rechte Streuscheibe mit entsprechenden Wurfschaufeln 4 und vorzugsweise einer entsprechenden Sensoranordnung mit Radarsensoren 6 und einer Schutzvorrichtung 8. Wie bereits erwähnt, kann eine einzige Schutzvorrichtung 8 vorgesehen sein, die die Radarsensoren 6 und auch die Schleuderscheiben 3 mit Wurfschaufeln 4 auf den dem Schleuderstreuer 1 abgewandten Seiten vollständig umschließend ausgebildet ist. Die dem Schleuderstreuer abgewandten Seiten der Schleuderscheibe oder Radarsensoren sind hierbei diejenigen Seiten, welche einer Person ohne vorhandene Schutzvorrichtung 8 ohne weiteres zugänglich sind und nicht durch sonstige Bauteile des Schleuderstreuers verdeckt werden.

Insbesondere ist vorgesehen und in Fig. 2 dargestellt, dass der horizontale Abstand zwischen der Schutzvorrichtung 8 und den Radarsensoren zumindest 5 cm, vorzugsweise mehr als 10 cm, beträgt, insbesondere wenn die Abstrahlrichtung eine Komponente besitzt, die vom Zentrum der Schleuderscheibe 3 zumindest annähernd weg zeigt. Es kann zudem vorgesehen sein, dass der Abstand derart gewählt wird, dass die messbare Leistungsflussdichte der Radarwellen auf der dem Schleuderstreuer abgewandten Seite der Schutzvorrichtung weniger als 10 W/m², insbesondere weniger als 1 W/m², beträgt.

Ebenfalls kann vorgesehen sein, wie in Fig. 1 dargestellt, dass die Schutzvorrichtung 8 oberhalb der Radarsensoren 6 angeordnet ist, sofern die horizontale Komponente der Abstrahlrichtung des oder der Radarsensoren zumindest annähernd radial vom Streuscheibenzentrum weg weist. In diesem Fall wird vermieden, dass die Radarwellen an der Schutzvorrichtung gestreut oder reflektiert werden und der Messvorgang auf diese Weise gestört wird.

Die Schutzvorrichtung 8 dient dazu, eine Person gegen unbedachtes Herantreten an die Radarsensoren 6 zu schützen und zudem vorzugsweise ein unbeabsichtigtes Berühren sich drehender Schleuderscheiben 3 bzw. sich bewegender Streuschaufeln 4 zu verhindern. Ein vorsätzliches und beabsichtigtes hineingreifen in den Bereich hinter der Schutzvorrichtung 8 ist hiermit nicht gemeint.

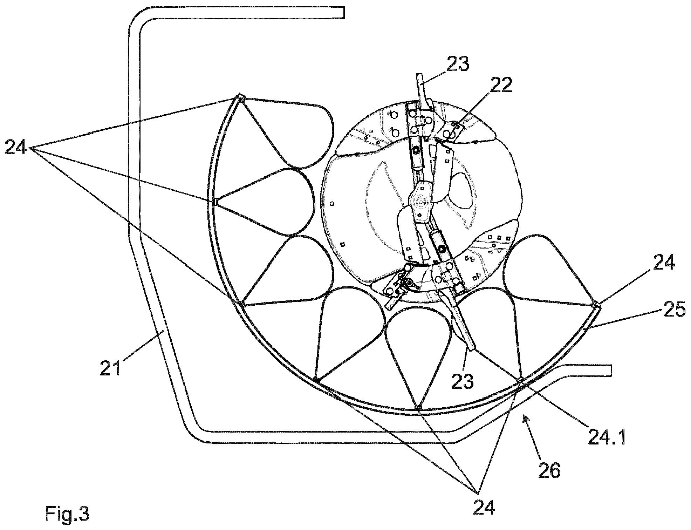

Im Vergleich dazu zeigt die Fig. 3 eine Schutzvorrichtung 21 eines Schleuderstreuers nach dem Stand der Technik. Analog zur Fig. 2 ist eine vertikale Ansicht eines bekannten Schleuderstreuers gezeigt, welche beispielsweise in der DE102013103060 offenbart ist. Der Schleuderstreuer verfügt in üblicher Weise über Streuscheiben 22 mit Wurfschaufeln 23. Die Radarsensoren 24 sind an der Haltevorrichtung 25 befestigt. Die Fig. 3 zeigt, dass die Schutzvorrichtung 21 zwar ein effektiver Schutz vor dem unbeabsichtigten Berühren der Streuscheibe 22 bildet, jedoch ist diese Schutzvorrichtung 21 ungeeignet einen Benutzer vor dem unbeabsichtigten Nähern der Radarsensoren 24 zu schützen, da zumindest im Bereich 26 der Abstand zwischen Radarsensor 24.1 und der Außenseite der Schutzvorrichtung 21 sehr gering ist. Eine sich im Bereich 21 der Schutzvorrichtung 21 aufhaltende Person könnte durch diese also nicht gegen die durch den Radarsensor 24.1 abgestrahlten Radarwellen geschützt werden. Dies gilt umso mehr, falls die Abstrahlrichtung der Radarsensoren, wie in Fig. 1 eine vom Streuscheibenzentrum wegweisende horizontale Komponente aufweist.

## Patentansprüche

1. Schutzvorrichtung (8) für einen landwirtschaftlichen Schleuderstreuer (1), wobei an dem Schleuderstreuer (1) zumindest ein Radarsensor (6) zur Ermittlung der Verteilcharakteristik des Schleuderstreuers (1) angeordnet ist, wobei der Radarsensor (6) einer Streuscheibe (3) des Schleuderstreuers (1) zugeordnet ist,
**dadurch gekennzeichnet, dass**
die Schutzvorrichtung (8) derart ausgebildet ist, dass ein Herantreten an den Radarsensor (6) erschwert oder verhindert wird.

2. Schutzvorrichtung (8) für einen landwirtschaftlichen Schleuderstreuer (1) nach Anspruch 1, **dadurch gekennzeichnet, dass** zumindest zwei Radarsensoren (6) in Umfangsrichtung um zumindest eine Verteilscheibe (3) des Schleuderstreuers (1) angeordnet sind und die Schutzvorrichtung (8) derart ausgebildet ist, dass ein Herantreten an die Radarsensoren (6) erschwert oder verhindert wird.

3. Schutzvorrichtung (8) für einen landwirtschaftlichen Schleuderstreuer (1) nach Anspruch 1 oder 2, **dadurch gekennzeichnet, dass** die Schutzvorrichtung (8) bügelartig ausgebildet ist.

4. Schutzvorrichtung (8) für einen landwirtschaftlichen Schleuderstreuer (1) nach zumindest einem der Ansprüche 1 bis 3, **dadurch gekennzeichnet, dass** die Radarsensoren (6) an einer Haltevorrichtung (7) angeordnet sind, welche zumindest abschnittsweise zumindest annähernd in Umfangsrichtung der Streuscheibe (3) verläuft und an zumindest einseitig am Schleuderstreuer (1) befestigt ist und dass die Schutzvorrichtung (8) zumindest im Bereich der Radarsensoren (6) die Haltevorrichtung auf der dem Schleuderstreuer (1) abgewandten Seite in horizontaler Richtung umschließend ausgebildet ist.

5. Schutzvorrichtung (8) für einen landwirtschaftlichen Schleuderstreuer (1) nach zumindest einem der Ansprüche 1 bis 4, **dadurch gekennzeichnet, dass** der Abstand zwischen Radarsensor (8) und Schutzvorrichtung (7) in radialer Richtung der Streuscheibe (3) zumindest 5 cm, vorzugsweise mehr als 10 cm, beträgt.

6. Schutzvorrichtung (8) für einen landwirtschaftlichen Schleuderstreuer (1) nach zumindest einem der Ansprüche 1 bis 5, **dadurch gekennzeichnet, dass** der Abstand zwischen Radarsensor (6) und Schutzvorrichtung (8) in Richtung der horizontalen Komponente der Abstrahlrichtung des Radarsensors (6) zumindest 5 cm, vorzugsweise mehr als 10 cm, beträgt.

7. Schutzvorrichtung (8) für einen landwirtschaftlichen Schleuderstreuer (1) nach zumindest einem der Ansprüche 1 bis 6, **dadurch gekennzeichnet, dass** der Abstand zwischen der Schutzvorrichtung (8) und dem Radarsensor (6) in vertikaler Richtung weniger als 30 cm, vorzugsweise weniger als 15 cm, beträgt.

8. Schutzvorrichtung (8) für einen landwirtschaftlichen Schleuderstreuer (1) nach zumindest einem der Ansprüche 1 bis 7, **dadurch gekennzeichnet, dass** die horizontale Komponente der Abstrahlrichtung des Radarsensors zumindest annähernd radial vom Zentrum der Streuscheibe (3) weg weist und dass die Schutzvorrichtung (8) oberhalb der Radarsensoren (6) angeordnet ist.

9. Schutzvorrichtung (8) für einen landwirtschaftlichen Schleuderstreuer (1) nach zumindest einem der Ansprüche 1 bis 8, **dadurch gekennzeichnet, dass** der radiale Abstand zwischen Radarsensor (6) und Schutzvorrichtung (8) auf der dem Schleuderstreuer abgewandten Seite derart gewählt wird, dass die messbare Leistungsflussdichte der Radarwellen auf der dem Schleuderstreuer (1) abgewandten Seite der Schutzvorrichtung (8) weniger als 10 W/m², insbesondere weniger als 1 W/m², beträgt.

10. Schutzvorrichtung (8) für einen landwirtschaftlichen Schleuderstreuer (1) nach zumindest einem der Ansprüche 1 bis 9, **dadurch gekennzeichnet, dass** die Schutzvorrichtung (8) zudem zumindest eine Streuscheibe (3) auf der dem Schleuderstreuer (1) abgewandten Seite in horizontaler Richtung umschließend ausgebildet ist, so dass ein unbeabsichtigtes Berühren der Streuscheibe (3) erschwert oder verhindert wird.

11. Landwirtschaftlicher Schleuderstreuer (1) mit einer Schutzvorrichtung (8) nach zumindest einem der Ansprüche 1 bis 10.
